(19) Europäisches Patentamt / European Patent Office / Office européen des brevets

(11) **EP 1 873 898 A2**

(12) **EUROPÄISCHE PATENTANMELDUNG**

(43) Veröffentlichungstag:
   **02.01.2008 Patentblatt 2008/01**

(51) Int Cl.:
   *H02P 6/14* *(2006.01)*

(21) Anmeldenummer: **07107544.4**

(22) Anmeldetag: **04.05.2007**

(84) Benannte Vertragsstaaten:
   **AT BE BG CH CY CZ DE DK EE ES FI FR GB GR HU IE IS IT LI LT LU LV MC MT NL PL PT RO SE SI SK TR**
   Benannte Erstreckungsstaaten:
   **AL BA HR MK YU**

(30) Priorität: **27.06.2006 DE 102006029360**
   **17.07.2006 DE 102006033026**

(71) Anmelder: **ROBERT BOSCH GMBH**
   **70442 Stuttgart (DE)**

(72) Erfinder:
   • **Kahles, Patric**
    **77815, Buehl (DE)**
   • **Best, Jochen**
    **77871, Renchen-Ulm (DE)**
   • **Mueller, Axel**
    **77797, Ohlsbach (DE)**
   • **Schoenemann, Anja**
    **77815, Buehl (DE)**

(54) **Verfahren zur Regelung einer Pumpe zum Fördern eines flüssigen Mediums**

(57) Es wird ein Verfahren vorgeschlagen für die Regelung einer Pumpe (20) zum Fördern eines flüssigen Mediums, insbesondere für die Regelung einer Zusatzwasserpumpe für Kraftfahrzeuge. Die Pumpe arbeitet mit einem elektronisch kommutierbaren Antriebsmotor (M) mit wenigstens zwei Wicklungen (30,32), die durch eine Steuereinheit (48) aus einem Gleichspannungsnetz (38,40) entsprechend den Triggersignalen (S) eines Drehzahlsensors (46) im Wechsel ansteuerbar sind. Die Regelung erfolgt derart, dass der Antriebsmotor (M) nach dem Anlauf der Pumpe (20) zunächst in einem lastgesteuerten Betrieb gefahren wird mit einem durch die Steuereinheit (48) vorgegebenen Kommutierungszeitpunkt (t0) für die Umschaltungen der Wicklungen (30,32), und dass aus der sich hieraus ergebenden Lastdrehzahl ($n_{Last}$) ein Kommutierungszeitpunkt ($t_1, t_2$) entsprechend einem vorgegebenen Arbeitspunkt mit einer Solldrehzahl ($n_{soll}$) errechnet und durch Änderung des Kommutierungszeitpunktes (t) eingestellt wird. Dieser Kommutierungszeitpunkt wird anschließend kontrolliert und bei einer Abweichung von dem vorgegebenen Sollwert ($n_{soll}$) der Drehzahl (n) durch Änderung des Kommutierungszeitpunktes (t) nachgeregelt. Änderungen der Parameter im Kreislauf des geförderten Mediums müssen so nicht durch separate Sensoren erfasst werden sondern können aus Veränderungen der Drehzahl (n) der Pumpe (20) bestimmt werden.

Fig. 4

EP 1 873 898 A2

**Beschreibung**

Stand der Technik

Die Erfindung geht aus von einem Verfahren zur Regelung einer Pumpe zum Fördern eines flüssigen Mediums, insbesondere einer Zusatzwasserpumpe für Kraftfahrzeuge, nach der Gattung des Anspruches 1. Derartige Verfahren sind grundsätzlich bekannt, einschließlich eines elektronisch kommutierbaren Antriebsmotors und der zugehörigen Steuereinheit, wie sie beispielsweise in der DE 101 17 252 A1 offenbart sind. Der dort beschriebene elektronisch kommutierbare Antriebsmotor besitzt einen durch Dauermagnete erregten, mit einer Pumpe koppelbaren Rotor und einen Stator mit zwei Wicklungen mit gegensinniger Wickelrichtung, welche wechselweise durch eine Steuerelektronik in Abhängigkeit von der Stellung des Rotors bestromt werden und ein Drehfeld erzeugen. Die Kommutierungssteuerung arbeitet hierbei mit einem Hallsensor, welcher Kommutierungssignale abhängig von der Rotorstellung an die Steuereinheit liefert. Soll diese Einheit zum geregelten Antrieb eine Pumpe benutzt werden, so benötigt sie zusätzlich zu der Information über die Rotorstellung und die Drehzahl weitere Daten zum Betriebszustand des Antriebsmotors sowie über die Fördermenge und den Druck im Pumpenkreislauf, wofür zusätzliche Sensoren benötigt werden.

Offenbarung der Erfindung

Das erfindungsgemäße Verfahren mit den kennzeichnenden Merkmalen des Hauptanspruches hat den Vorteil, dass zur Regelung der Pumpe außer einem Drehzahlsensor keine zusätzlichen Sensoren benötigt werden, insbesondere keine Messeinrichtungen für die Fördermenge und den Druck im Pumpenkreislauf, da der Einfluss dieser Faktoren bei Kenntnis der Pumpendaten allein aus Drehzahländerungen abgeleitet werden kann.

Um schwerwiegende Störungen bei der Durchführung des erfindungsgemäßen Regelungsverfahrens frühzeitig zu erkennen, hat es sich als zweckmäßig erwiesen, wenn eine Mindestdrehzahl des Antriebsrotors vorgegeben und die Pumpe bei Unterschreiten oder Nichterreichen dieser Mindestdrehzahl gestoppt wird. Hierdurch können insbesondere eine Blockierung oder Schwergängigkeit sowie größere Schwankungen der Parameter im Pumpenkreislauf in der Anlaufphase eliminiert und der Regelprozess vereinfacht werden.

Das erfindungsgemäße Verfahren kann sowohl zur Regelung des Pumpenkreislaufs bei einem Betrieb mit konstanten Parametern wie auch für einen Betrieb mit veränderbaren oder geregelten Parametern verwendet werden. Bei der Einstellung des Arbeitspunktes ist es zweckmäßig, wenn der Antriebsmotor bei einer Abweichung des Sollwertes vom Istwert der Drehzahl ohne Vorgabe eines neuen Sollwertes zunächst einen weiteren lastgesteuerten Referenzlauf durchführt und der Arbeitspunkt dann neu berechnet, eingestellt und kontrolliert wird. Wenn dagegen lediglich eine veränderte Einstellung des Arbeitspunktes des Antriebsmotors auf einen neuen Sollwert der Drehzahl durchgeführt wird, so kann der vorgeschaltete lastgesteuerte Referenzlauf entfallen und der Regelvorgang hierdurch beschleunigt werden.

Die Drehzahl der Pumpe kann in besonders einfacher Weise direkt aus der Pulsweite der Signale eines Hallsensors ermittelt werden, wobei im eingeschwungenen Zustand die Dauer der Bestromungsimpulse für die Wicklungen des Antriebsmotors jeweils etwa der Dauer der Hallsignale entspricht. Hierdurch lässt sich eine besonders einfache Regelungsmöglichkeit für die Motordrehzahl ableiten, indem der Kommutierungszeitpunkt für die Bestromung der Wicklungen zur Erhöhung der Motordrehzahl gegenüber den Flankenwechseln der Signale des Hallsensors vorverlegt und zur Reduzierung der Motordrehzahl zurückverlegt wird, wobei die Pulsweite der Bestromungsimpulse am Ende der Drehzahlveränderung wieder der Dauer der Hallimpulse entspricht.

Zusätzlich zu den vorgenannten erfindungswesentlichen Merkmalen zur Drehzahlregelung einer Pumpe allein aus Drehzahländerungen kann es zweckmäßig sein, wenn im Betrieb die zur Verfügung stehende Speisespannung des Gleichspannungsnetzes und die Temperatur des geförderten Mediums überwacht werden. Diese beiden Größen sind anders als beispielsweise die Fördermenge und der Druck im System einfach zu ermitteln, wobei die gemessene Spannung zur Berechnung einer normierten Drehzahl und die Temperatur im Fördermedium als Korrekturfaktor für die errechnete Drehzahl benutzt werden kann, wodurch sich eine weitere Vereinfachung und Präzisierung des Regelvorgangs ergeben.

Kurze Beschreibung der Zeichnungen

Ausführungen des erfindungsgemäßen Verfahrens sind in den Zeichnungen dargestellt und in der nachfolgenden Beschreibung näher erläutert.

Es zeigen:

Fig. 1      ein Ausführungsbeispiel des Kühlwasserkreislaufs in einem Kraftfahrzeug,

Fig. 2      eine Schaltungsanordnung zur Steuerung eines elektrischen Antriebsmotors für eine Pumpe,

Fig. 3      schematisierte Diagramme zum Verlauf der Steuersignale und der zugehörigen Bestromungssignale für den Antriebsmotor einer Pumpe,

Fig. 4      ein Flussdiagramm des erfindungsgemäßen Regelungsverfahrens,

Fig. 5  ein Diagramm des normierten Differenzdruckes $P_{norm}$ der Pumpe als Funktion ihrer spannungsnormierten Drehzahl $n_{norm}$ und

Fig. 6  verschiedene Kennlinien der geförderten Flüssigkeitsmenge Q in Abhängigkeit von der Pumpendrehzahl n bei unterschiedlichen Differenzdrücken zwischen dem Pumpeneingang und dem Pumpenausgang

Ausführungsformen der Erfindung

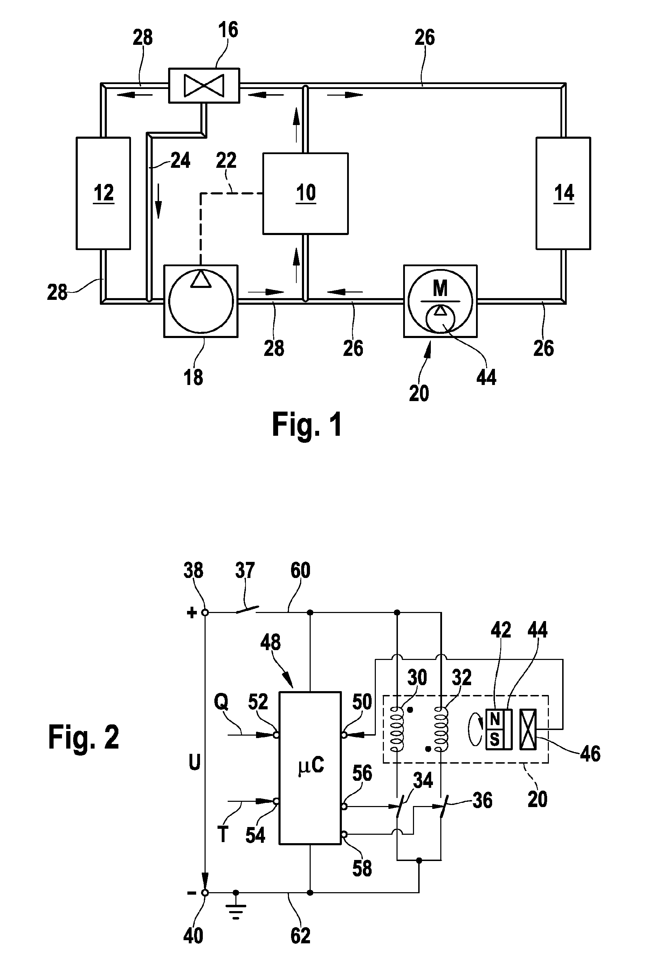

Fig. 1 zeigt schematisch den Kühlungs- und Heizungskreislauf eines Kraftfahrzeuges mit einem Verbrennungsmotor 10, einem Kühler 12, einem Wärmetauscher 14 für die Heizung, einem Thermostatventil 16, einer Hauptwasserpumpe 18 und einer Zusatzwasserpumpe 20. Die Hauptwasserpumpe 18 ist hierbei über eine zum Beispiel als Keilriemen ausgebildete Antriebsverbindung 22 mit dem Verbrennungsmotor 10 gekoppelt, der Antrieb der Zusatzwasserpumpe 20 erfolgt durch einen separaten elektrischen Antriebsmotor M.

Bei laufendem Verbrennungsmotor 10 fließt das Kühlmittel bei kaltem Motor und geschlossenem Thermostatventil 16 zunächst über eine Leitung 24 und die Hauptwasserpumpe 18 zwecks schnellerer Erwärmung des Motors direkt zu diesem zurück. Da der elektrische Antriebsmotor M der Zusatzwasserpumpe 20 separat eingeschaltet wird kann diese mit dem Starten des Verbrennungsmotors 10 oder zu einem späteren Zeitpunkt aktiviert werden, beispielsweise erst nach dem Öffnen des Thermostatventils 16. Der Heizungskreislauf über den Verbrennungsmotor 10, den Wärmetauscher 14 und die Zusatzwasserpumpe 20 ist mit 26 bezeichnet. Der Kühlkreislauf 28 über den Verbrennungsmotor 10, das Thermostatventil 16, den Kühler 12 und die Hauptwasserpumpe 18 wird aktiv, sobald das Kühlmittel für den Verbrennungsmotor 10 eine Temperatur erreicht hat, bei welcher das Thermostatventil 16 öffnet.

Gegenstand der vorliegenden Erfindung ist ein Verfahren zur Regelung einer Pumpe mit einem elektronisch kommutierbaren Antriebsmotor M, wie sie in der Anordnung gemäß Fig. 1 als Zusatzwasserpumpe 20 in einem Kraftfahrzeug Anwendung findet. Das Schaltungsschema zum Betreiben des Antriebsmotors M ist in Fig. 2 dargestellt. Der Antriebsmotor weist dabei zwei Wicklungen 30 und 32 mit entgegengesetztem Wickelsinn auf, welche über elektronische Halbleiter-Leistungsschalter 34 und 36 und einen Zündschalter 37 an ein Gleichspannungsnetz mit einem Pluspol 38 und einem mit Masse verbundenem Minuspol 40 anschließbar sind. Zwischen den Polen des Gleichspannungsnetzes liegt die Speisespannung U für den Antriebsmotor M, beispielsweise die Batteriespannung eines Kraftfahrzeuges. Der Motor M ist als permanentmagnetisch erregter Motor ausgebildet. Der mit der Bezugsziffer 42 versehene permanentmagnetische Rotor ist dabei mit der Pumpe 44 für das flüssige Kühlmittel gekoppelt, die Drehbewegung des Rotors 42 und der Pumpe 44 wird durch einen Hallsensor 46 überwacht.

Die Steuerung des elektronisch kommutierbaren Antriebsmotors M erfolgt durch eine Steuereinheit 48 in Form eines Mikrocontrollers, welche an ihrem Eingang 50 die Signale des Hallsensors 46, an ihrem Eingang 52 einen Fördermengensollwert Q und an ihrem Eingang 54 ein Signal entsprechend der Temperatur T des geförderten flüssigen Mediums erhält. Der Ausgang 56 der Steuereinheit 48 liefert die Steuersignale für den Leistungsschalter 34, der Ausgang 58 die Steuersignale für den Leistungsschalter 36. Außerdem ist die Steuereinheit 48 mit der Zuleitung 60 zum Pluspol und mit der Zuleitung 62 zum Minuspol des Gleichspannungsnetzes verbunden und überwacht so die Speisespannung U des Motors M.

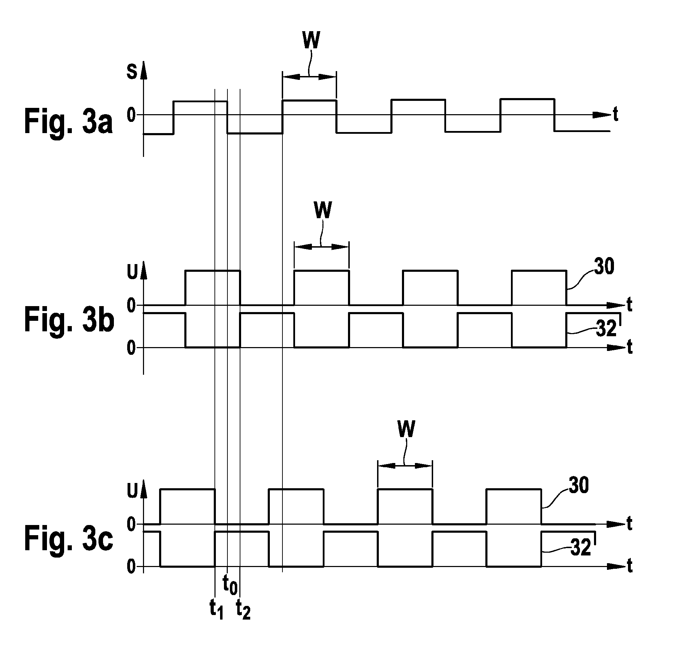

Die Kommutierung und die Spannungsversorgung des Motors M sind aus Fig. 3 ersichtlich. Dort sind in der Abbildung a) die Ausgangssignale S des Hallsensors 46 dargestellt, deren Impulsweite W drehzahlabhängig ist und jeweils eine Teilumdrehung des Rotors 42 und des Pumpenaggregates 40 definiert. Der für die Steuerung relevante Flankenwechsel der Hallsignale erfolgt zum Zeitpunkt $t_0$.

Der Wechsel der Bestromung der Wicklungen 30 und 32 erfolgt im eingeschwungenen Zustand ebenfalls zum Zeitpunkt $t_0$ beim Flankenwechsel des Hallsignals. Die Dauer der Spannungsimpulse U für die Bestromung der Wicklungen 30 und 32 ist gleich der Dauer W der Hallsignale S. Durch die gegensinnige Wicklungsrichtung in den Wicklungen 30 und 32 wechselt also abhängig von der Anzahl der Magnete des Rotors 42 die Bestromungsrichtung im Stator des Antriebsmotors M und es wird ein Drehfeld erzeugt, welches im Zusammenwirken mit dem permanentmagnetischen Rotor 42 das Pumpenaggregat 44 mit einer bestimmten Drehzahl n antreibt.

Eine Drehzahlerhöhung des Antriebsmotors kann in sehr einfacher Weise dadurch bewirkt werden, dass der Bestromungszeitpunkt für die Wicklungen 30 und 32 auf den Zeitpunkt $t_1$ vorverlegt wird. Eine Reduzierung der Motordrehzahl n erreicht man durch eine Verzögerung des Kommutierungszeitpunktes auf den Zeitpunkt $t_2$. Dieser Effekt tritt ein, weil der Rotor 42 den Kommutierungsänderungen nicht spontan folgen kann, so dass durch die Verschiebung des Statordrehfeldes gegenüber dem Rotordrehfeld eine Beschleunigung oder eine Verlangsamung der Motordrehzahl n eintritt. Diese Betriebszustände sind in den Abbildungen der Fig. 3b und 3c dargestellt. Die Pulsweite W bei der Bestromung der Wicklungen 30 und 32 entspricht dabei jeweils der Pulsweite W des Hallsignals. Diese verändert sich mit der Drehzahl des Rotors 42 dahingehend, dass sie mit steigender Drehzahl kürzer, mit reduzierter Drehzahl länger wird. Die Drehzahl n des Rotors entspricht dem Kehrwert der Pulsdauer der Hallsignale, wobei ein Magnetfeldwechsel am Rotor beziehungsweise am Pumpenaggregat 44 entsprechend der Rotation dessen Flügelrades jeweils einen Flankenwechsel des Hallsensors 46 erzeugt bei dem die Ansteuerung zwischen den Wicklungen 30 und 32 umgeschaltet wird. Die Erhöhung der Drehzahl n der Pumpe 20 durch eine Vorverlegung des Kommutierungszeitpunktes ist hierbei jedoch nur innerhalb gewisser Grenzen möglich, da die Drehbewegung abbricht, wenn die vorzeitige Ansteuerung zum Zeitpunkt $t_1$ zu groß gewählt wird. Der Vorkommutierungswinkel und die Maximaldrehzahl müssen daher begrenzt werden.

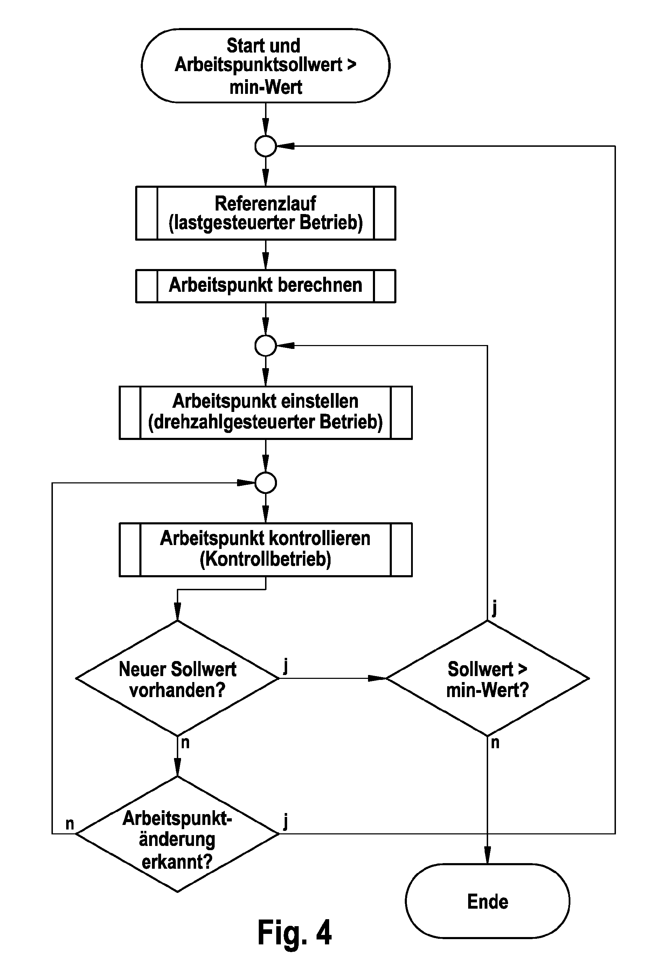

Fig. 4 zeigt ein Flussdiagramm des erfindungsgemäßen Verfahrens zur Regelung einer Pumpe zum Fördern eines flüssigen Mediums, im Ausführungsbeispiel der Zusatzwasserpumpe 20 im Kühlkreislauf eines Kraftfahrzeuges. Hierbei wird beim Anlauf der Pumpe 20 zunächst ein fester Kommutierungszeitpunkt t vorgegeben, bei dem sich entsprechend der angeschlossenen Last ein erster Arbeitspunkt ergibt. Für die Drehzahl in diesem ersten Arbeitspunkt wird ein Mindestwert festgesetzt, welcher im Betrieb nicht unterschritten werden darf. Ist die angeschlossene Last zu hoch, beispielsweise beim Blockieren oder einer Schwergängigkeit der Pumpe, so schaltet die Steuereinheit 48 den Antriebsmotor M der Pumpe ab.

Im lastgesteuerten Betrieb wird nun die Pumpe 20 zunächst in einem Referenzlauf gefahren und aus der sich einstellenden Lastdrehzahl $n_{Last}$ die Drehzahl für einen Arbeitspunkt bei der an der Steuereinheit 48 vorgegebenen Solldrehzahl $n_{soll}$ errechnet und in Form eines geänderten Kommutierungszeitpunktes t über die Ausgänge 56 und 58 der Steuereinheit 48 an die Leistungsschalter 34 und 36 ausgegeben (Arbeitspunkt einstellen). Der der Solldrehzahl entsprechende Kommutierungspunkt wird anschließend dauernd oder in vorgegebenen Zeitabständen kontrolliert.

Wird eine Abweichung des Arbeitspunktes des Antriebsmotors M entsprechend einer Abweichung des Istwertes vom Sollwert $n_{soll}$ der Drehzahl ohne Vorgabe eines neuen, geänderten Sollwertes erkannt, so muss der Arbeitspunkt neu berechnet und eingestellt werden. Hierzu ist ein weiterer lastgesteuerter Referenzlauf mit einer sich aus der veränderten Last ergebenden neuen Lastdrehzahl $n_{Last}$ erforderlich, aus welcher der Arbeitspunkt dann neu berechnet eingestellt und kontrolliert werden muss. Hat sich dagegen der vorgegebene Sollwert $n_{soll}$ der Drehzahl selbst geändert, so kann die Einstellung des Antriebsmotors M auf den neuen Arbeitspunkt ohne vorgeschalteten lastgesteuerten Referenzlauf erfolgen. Auch hierbei darf jedoch der vorgegebene Mindestwert der Drehzahl n nicht unterschritten werden, andernfalls muss der Antriebsmotor M abgeschaltet werden. Auf diese Weise werden Änderungen der Parameter im Kreislauf des geförderten Mediums allein aus Veränderungen der Drehzahl n der Pumpe 20 erkannt und können ohne zusätzliche Sensorik ausgeregelt werden.

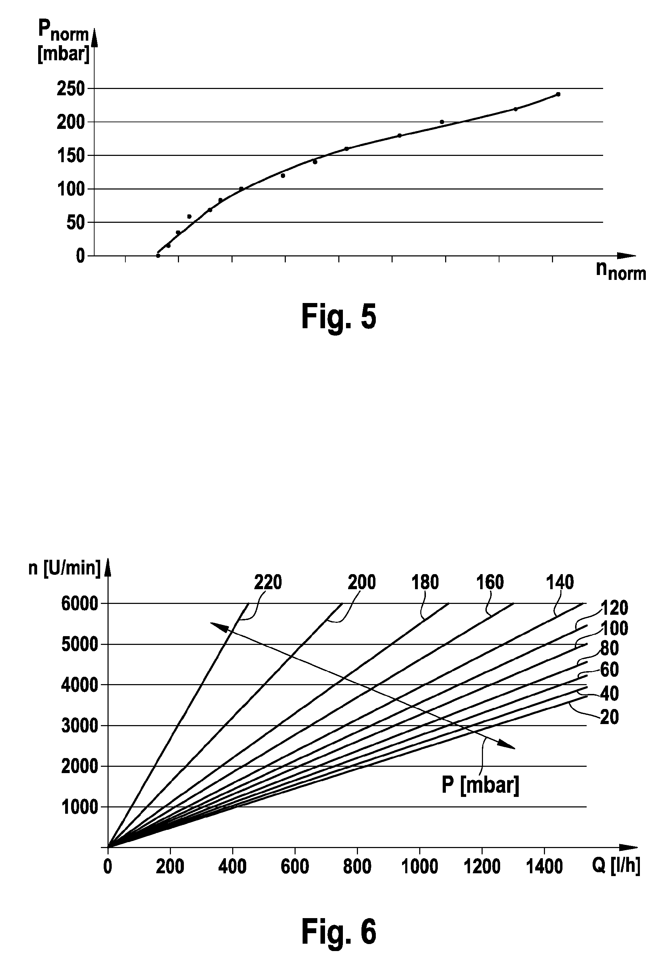

Anhand der Figuren 5 und 6 wird die Regelung der Fördermenge der Pumpe 20 näher erläutert. Hierzu ist in Fig. 5 der normierte Differenzdruck $P_{norm}$ im Pumpenkreislauf zwischen dem Pumpeneingang und dem Pumpenausgang als Funktion einer normierten Drehzahl $n_{norm}$ dargestellt. Die normierte Drehzahl $n_{norm}$ errechnet sich nach der Gleichung $n_{norm} = n + (U'-U) \cdot K$. Hierin ist n die aktuelle Drehzahl. Die Spannung U' ist eine Referenzspannung, beispielsweise die zulässige Betriebsspannung der Pumpe. Die Spannung U ist die jeweils aktuell an der Pumpe gemessene Betriebsspannung. Der Faktor K ist eine Pumpenkonstante oder ein Parameter der Pumpe entsprechend dem Quotienten aus der Differenz eines oberen Drehzahlwertes $n_o$ und eines unteren Drehzahlwertes $n_u$, dividiert durch die Differenz der zugehörigen, an der Pumpe gemessenen Spannungswerte beim oberen Drehzahlwert und beim unteren Drehzahlwert:

$$K = (n_o - n_u) : (U_o - U_u)$$

Bei einem Ausführungsbeispiel für eine an einem 12 Volt-Bordnetz eines Kraftfahrzeuges betriebene Zusatzwasserpumpe betrug der obere Spannungswert 16 Volt, der untere Spannungswert 10 Volt und der Referenzwert U' 17 Volt. In Abhängigkeit von der normierten Drehzahl $n_{norm}$ ergibt sich nun ein Differenzdruck P an der Pumpe entsprechend der Kurve in Fig.5, welcher in der Steuereinheit 48 hinterlegt wird.

Fig. 6 zeigt in einer Kurvenschar für Differenzdrücke P zwischen 20 mbar und 220 mbar die bei einer bestimmten Drehzahl n von der Pumpe 22 geförderte Flüssigkeitsmenge Q. Hierbei ist der normierte Druck $P_{norm}$ gemäß Fig.5 auf den realen Differenzdruck P zurückgerechnet: $P = \dfrac{U}{U'} \cdot P_{norm}$. In Abhängigkeit vom Differenzdruck P kann entsprechend diesen Kennlinien die Fördermenge Q der Pumpe 20 durch entsprechende Drehzahlvariationen eingestellt werden, beziehungsweise die Solldrehzahl $n_{soll}$ für die Fördermenge Q ermittelt werden, wenn die Systemcharakteristik gemäß Fig. 5 als Gleichung oder als Kennlinie in der Steuereinheit 48 hinterlegt ist. Die Solldrehzahl wird von der Steuereinheit 48 durch die Vorgabe des zugeordneten Kommutierungszeitpunktes t entsprechend der Darstellung in Fig. 3 eingestellt. Nach dem Erreichen der Solldrehzahl oder eines vorgegebenen Maximalwertes der Drehzahl entsprechend dem zulässigen Höchstwert der Vorkommutierung wechselt das Verfahren in den Kontrollzustand und der Kommutierungszeitpunkt wird nicht mehr verändert, solange die Drehzahl einen zulässigen Schwankungsbereich von beispielsweise 2,5% des vorgegebenen Drehzahlwertes nicht überschreitet. Übersteigt oder unterschreitet die aktuelle Drehzahl den vorgegebenen Grenzwert, so kann von einer Änderung der externen Parameter im Pumpenkreislauf ausgegangen werden und die Pumpe 22 muss durch eine neue Referenzmessung die Fördermenge Q nachregeln.

Zur Erhöhung der Regelgenauigkeit kann die Temperatur T in dem Regelkreis zusätzlich berücksichtigt werden. Dazu muss die Kurve gemäß Fig. 5 temperaturkompensiert erfasst oder als Kurvenschar mit der Temperatur T als zusätzlichem Parameter in der Steuereinheit 48 abgespeichert werden. Die Temperatur T wird in diesem Fall mit einem zusätzlichen Sensor gemessen und über den Eingang 54 in die Steuereinheit 48 eingegeben.

**Patentansprüche**

1. Verfahren zur Regelung einer Pumpe (20) zum Fördern eines flüssigen Mediums, insbesondere einer Zusatzwasserpumpe für Kraftfahrzeuge, welche einen elektronisch kommutierbaren Antriebsmotor (M) mit wenigstens zwei Wicklungen (30,32) aufweist, die durch eine Steuereinheit (48) aus einem Gleichspannungsnetz (38,40) entsprechend den Triggersignalen (S) eines Drehzahlsensors (46) im Wechsel ansteuerbar sind, **dadurch gekennzeichnet, dass** der Antriebsmotor (M) nach dem Anlauf der Pumpe (20) zunächst in einem lastgesteuerten Betrieb gefahren wird mit einem durch die Steuereinheit (48) vorgegebenen Kommutierungszeitpunkt ($t_0$) für die Umschaltung der Wicklungen (30,32), und dass aus der sich hieraus ergebenden Lastdrehzahl ($n_{Last}$) ein Kommutierungszeitpunkt ($t_1$, $t_2$) entsprechend einem vorgegebenen Arbeitspunkt mit einer Solldrehzahl ($n_{soll}$) errechnet und durch Änderung des Kommutierungszeitpunktes (t) eingestellt wird, welcher anschließend kontrolliert und bei einer Abweichung von dem vorgegebenen Sollwert ($n_{soll}$) der Drehzahl (n) durch Änderung des Kommutierungszeitpunktes (t) nachgeregelt wird.

2. Verfahren nach Anspruch 1, **dadurch gekennzeichnet, dass** der Antriebsmotor (M) unter Vorgabe einer Mindestdrehzahl ($n_{min}$) gestartet und bei Unterschreitung dieser Mindestdrehzahl gestoppt wird.

3. Verfahren nach Anspruch 1 oder 2, **dadurch gekennzeichnet, dass** der Arbeitspunkt des Antriebsmotors (M) bei einer Abweichung des Sollwertes ($n_{soll}$) vom Istwert der Drehzahl (n) ohne Vorgabe eines neuen Sollwertes ($n_{soll}$) nach einem weiteren lastgesteuerten Referenzlauf ($n_{Last}$) neu berechnet, eingestellt und kontrolliert wird.

4. Verfahren nach einem der vorhergehenden Ansprüche, **dadurch gekennzeichnet, dass** die Einstellung des Arbeitspunktes des Antriebsmotors (M) auf einen neuen Sollwert ($n_{soll}$) der Drehzahl (n) ohne vorgeschalteten lastgesteuerten Referenzlauf erfolgt.

folgt.

5. Verfahren nach einem der vorhergehenden Ansprüche, **dadurch gekennzeichnet, dass** die Drehzahl (n) der Pumpe (20) aus der Pulsweite (W) der Signale (S) eines Hallsensors (46) ermittelt wird.

6. Verfahren nach einem der vorhergehenden Ansprüche, **dadurch gekennzeichnet, dass** der Kommutierungszeitpunkt (t) für die Bestromung der Wicklungen (30,32) zur Erhöhung der Motordrehzahl (n) gegenüber den Signalen (S) des Drehzahlsensors vorverlegt ($t_1$) und zur Reduzierung der Motordrehzahl (n) zurückverlegt ($t_2$) wird.

7. Verfahren nach Anspruch 6, **dadurch gekennzeichnet, dass** die Pulsweite (W) der Bestromungsimpulse der Wicklungen (30,32) der Pulsweite (W) der Hallimpulse (S) entspricht.

8. Verfahren nach einem der vorhergehenden Ansprüche, **dadurch gekennzeichnet, dass** die Vorkommutierung ($t_1$) bei der Bestromung der Wicklungen (30,32) gegenüber über den Signalen ($S$, $t_0$) des Drehzahlsensors (46) auf einen Maximalwert begrenzt wird.

9. Verfahren nach einem der vorhergehenden Ansprüche, **dadurch gekennzeichnet, dass** die Speisespannung (U) des Antriebsmotors (M) durch die Steuereinheit (48) überwacht wird.

10. Verfahren nach einem der vorhergehenden Ansprüche, **dadurch gekennzeichnet, dass** aus der ermittelten Drehzahl (n), der gemessenen Speisespannung (U) und einer Referenzspannung (U') eine pumpenspezifische normierte Drehzahl ($n_{norm}$) errechnet und aus dieser Änderungen von Systemparametern (T,P,Q) im Kreislauf des geförderten Mediums bestimmt werden.

11. Verfahren nach einem der vorhergehenden Ansprüche, **dadurch gekennzeichnet, dass** die Temperatur (T) im geförderten Medium gemessen und die Parameter des Pumpenkreislaufs temperaturkompensiert kontrolliert und eingestellt werden.

EP 1 873 898 A2

Fig. 1

Fig. 2

EP 1 873 898 A2

Fig. 3a

Fig. 3b

Fig. 3c

Start und
Arbeitspunktsollwert >
min-Wert

Referenzlauf
(lastgesteuerter Betrieb)

Arbeitspunkt berechnen

Arbeitspunkt einstellen
(drehzahlgesteuerter Betrieb)

Arbeitspunkt kontrollieren
(Kontrollbetrieb)

Neuer Sollwert
vorhanden?

j

Sollwert >
min-Wert?

n

n

Arbeitspunktänderung
erkannt?

j

Ende

# Fig. 4

Fig. 5

Fig. 6

**EP 1 873 898 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10117252 A1